# EUROPÄISCHE PATENTSCHRIFT

(11) **EP 2 786 026 B1**
(45) Veröffentlichungstag und Bekanntmachung des Hinweises auf die Patenterteilung: **14.10.2015**
(21) Anmeldenummer: 12809638.5
(22) Anmeldetag: 30.11.2012
(51) Int. Cl.: E04B 1/58, F16B 7/18, E04C 3/04, E04B 1/38

(54) **PROFILSTAB, PROFILVERBUND SOWIE VERFAHREN ZUM HERSTELLEN EINES PROFILVERBUNDES**
PROFILE BAR, PROFILE ASSEMBLY AND METHOD FOR PRODUCING A PROFILE ASSEMBLY
BARRE PROFILÉE, ASSEMBLAGE DE PROFILÉS ET PROCÉDÉ DE FABRICATION D'UN ASSEMBLAGE DE PROFILÉS

(30) Priorität: 30.11.2011 DE 102011055879
(43) Veröffentlichungstag der Anmeldung: 08.10.2014
(73) Patentinhaber: Flaig, Hartmut, 78554 Aldingen (DE)
(72) Erfinder: Flaig, Hartmut, 78554 Aldingen (DE)
(74) Vertreter: Wagner, Kilian
(86) Internationale Anmeldenummer: PCT/EP2012/074130
(87) Internationale Veröffentlichungsnummer: WO 2013/079681

(56) Entgegenhaltungen:
- EP-A1- 1 227 251
- EP-A2- 1 635 075
- DE-A1- 19 638 221
- DE-U1- 20 201 977
- DE-U1- 29 611 887
- US-A1- 2009 000 235

## Beschreibung

Die Erfindung betrifft einen Profilstab gemäß Anspruch 1, ein System mit mindestens einem derartigen Profilstab gemäß Anspruch 9 sowie einen Profilverbund, umfassend zwei erfindungsgemäße Profilstäbe gemäß Anspruch 14 sowie ein Verfahren zum Herstellen eines solchen Profilverbundes gemäß Anspruch 16.

Profilstäbe, insbesondere Aluminiumprofilstäbe sind allgemein bekannt und dienen zum Herstellen bzw. Ausbilden von Tragkonstruktionen, die beispielsweise Bestandteil von Maschinenanlagen oder dergleichen sind. Hierbei werden üblicherweise eine Vielzahl von Profilstäben verwendet, die zur Ausbildung eines Gestells starr miteinander verbunden werden, wobei zum rechtwinkligen miteinander Verbinden von Profilstäben die unterschiedlichsten Verbindungselemente bekannt sind, die üblicherweise zwei benachbarte Profilstäbe gegeneinander verspannen. Zu diesem Zweck greifen die Verbindungselemente im Regelfall in mindestens eine hinterschnittene Längsnut eines ersten Profils ein und in eine weitere hinterschnittene Längsnut eines zweiten Profils oder alternativ in einen Längskanal, insbesondere Zentralkanal des zweiten Profils, mit dem das Verbindungselement zum Beispiel durch Verschrauben festgelegt wird. Der Eingriff in eine hinterschnittene Längsnut erfolgt häufig mittels eines sogenannten Nutsteins.

Wenn nun ein erster Profilstab mit einer Stirnseite, beispielsweise mittels eines Nutsteins und einer mit diesem zusammenwirkenden Spannschraube gegen eine Seitenfläche eines zweiten Profilstabes festgelegt ist, ergibt sich die Problematik, dass über den mit seiner Stirnseite an der Seitenfläche des zweiten Profilstabs anliegenden ersten Profilstab beim Einleiten einer senkrecht zur Längsachse des ersten Profilstabs verlaufenden Kraft auf den Nutstein eine Zugkraft ausgeübt wird. Diese Zugkraft bewirkt im Zusammenhang mit der relativ kleinen Stirnfläche des ersten Profilstabes die Gefahr des Aufbiegens der hinterschnittenen Längsnut des zweiten Profilstabs, so dass der Nutstein nicht mehr sicher gehalten ist. Es besteht somit die Gefahr, dass sich der erste Profilstab vom zweiten Profilstab löst. Weiterhin besteht die Problematik, dass sich der erste Profilstab beim Einleiten eines Drehmoments senkrecht zu seiner Längsachse um seine Längsachse zum zweiten Profilstab verdrehen lässt, was eine lage, bzw. winkelgerechte Montage der Profilstäbe zueinander erschwert sowie beim fertigen Profilverbund gegebenenfalls zusätzliche Bauteile zur Verdrehsicherung erfordert.

Verbindungselemente zum miteinander Verbinden von Profilstäben sind beispielsweise aus der DE 20 2007 002 604 U1 sowie der DE 299 10 404 U1 bekannt. Die bekannten Verbindungselemente sind dazu geeignet, zwei Profilstäbe in Längsrichtung oder senkrecht miteinander zu verbinden, wobei bei den bekannten Verbindungselementen ebenfalls über die in den hinterschnittenen Längsnuten angeordneten Elemente Zugkräfte erzeugt werden, die die sie aufnehmende Längsnut, wie oben erläutert, aufweiten können.

Ein typischer, in der Praxis weit verbreiterter Profilstab ist in der DE 197 5 70 89 C1 beschrieben. Dieser bekannte Profilstab ist quadratisch konturiert und weist mittig auf jeder Seite eine hinterschnittene Längsnut zum Festlegen eines weiteren Profilstabes auf, wie in der Druckschrift umfangreich beschrieben ist. Bei dem bekannten Profilstab besteht ebenfalls die erläuterte Gefahr des Aufbiegens der hinterschnittenen Längsnut.

Aus der US 5,921,052 ist ein alternativer Profilstab bekannt, der neben jeder hinterschnittenen Längsnut zwei die hinterschnittene Längsnut zwischen sich aufnehmende, nicht hinterschnittene Hilfsnuten mit rechteckiger Querschnittsfläche aufweist, die zum Festlegen weiterer Bauteile dienen, in dem diese formschlüssig in die zusätzlichen Nuten eingreifen.

Aus der DE 92 10 639 ist weiterhin ein alternativer Profilstab bekannt, der parallel zu einem Zentralkanal verlaufende, auf den Ecken eines gedachten Quadrates sitzende Längskanale aufweist. Diese zusätzlichen Längskanäle dienen dazu in ihrem jeweiligen stirnseitigen Endabschnitt mit einem Gewinde versehen zu werden, um hierin Verbindungselemente zum miteinander Verspannen zweier Profilstäbe einschrauben zu können. Ziel ist es, die Zentralbohrung als Druckluftleitung nutzen zu können.

Die beschriebenen Profilstäbe dienen, wie erwähnt, insbesondere zur Herstellung für Gestelle im Maschinenbau oder sonstigen Tragkonstruktionen. Auch ist es üblich, an einer entsprechenden Profilstabkonstruktion ein Türelement an einem vertikal verlaufenden Profilstab anzuordnen, in dem in der zugehörigen hinterschnittenen Längsnut des Profilstabes entsprechende Verbindungselemente festgelegt werden, über die Zugkräfte senkrecht zur Längserstreckung des Profilstabes ausgeübt werden, die ebenfalls zu einem Aufweiten der hinterschnittenen Längsnut führen können, so dass insbesondere bei zusätzlichen äußeren Krafteinwirkungen auf das Türelement die Gefahr besteht, dass das Verbindungselement aus der hinterschnittenen Nut des Profilstabes herausgezogen wird.

Aus der DE 296 11 887 U1 ist ein Profilstab bekannt, welcher an jeder Seitenwand eine mittige hinterschnittene Längsnut aufweist, wobei jede hinterschnittene Längsnut zwischen zwei Längsnuten eines Längsnutenpaares angeordnet ist. Bei dem bekannten Profilstab dienen die Längsnutenpaare zur Wechselwirkung mit Vorsprüngen von Winkelelementen. Zur Gewichtseinsparung sind in dem Profilstab stirnseitige Öffnungen von Längskanälen vorgesehen, die sich parallel zu den nach außen offenen Längsnuten des Profilstabes erstrecken.

Aus der US 2009/0000235 A1 ist ein Profilstab mit mehreren hinterschnittenen Längsnuten auf jeder Seite des Profilstabes bekannt.

In Kenntnis des vorgenannten Standes der Technik besteht die Aufgabe darin, einen verbesserten, alternativen Profilstab anzugeben, der dazu geeignet ist in einem Profilverbund auf einfache Weise eine Verdrehsicherung zu realisieren.

Bevorzugt soll der Profilstab zusätzlich dazu geeignet sein, beispielsweise über einen Nutstein oder ein sonstiges Verankerungselement in eine hinterschnittene Längsnut eingebrachte Zugkräfte ohne die Gefahr der Verformung bzw. Aufweitung der Längsnut aufnehmen zu können.

Ferner besteht die Aufgabe darin, ein System anzugeben, mit welchem unter Verwendung eines erfindungsgemäßen Profilstabes eine Verdrehsicherung gegeben ist und ggf. ein Aufweiten einer hinterschnittenen Längsnut sicher vermieden wird. Darüber hinaus besteht die Aufgabe darin, einen entsprechend verbesserten Profilverbund sowie ein Verfahren zum Herstellen eines solchen Profilverbundes anzugeben.

Diese Aufgabe wird hinsichtlich des Profilstabes mit den Merkmalen des Anspruchs 1, hinsichtlich des Systems mit den Merkmalen des Anspruchs 9 hinsichtlich des Profilverbundes mit den Merkmalen des Anspruchs 14 und hinsichtlich des Verfahrens mit den Merkmalen des Anspruchs 16 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Kerngedanke der Erfindung ist es, bei einem Profilstab parallel zu Längsnuten verlaufende Längskanäle derart vorzusehen, dass stirnseitig in von den Längskanälen gebildete Öffnungen über die Stirnseite vorstehende Stifte derart einbringbar sind, dass die Stifte in die Längsnuten eines identisch aufgebauten und rechtwinklig zu dem Profilstab angeordneten weiteren Profilstab eingreifen können, um hierdurch die beiden Profilstäbe gegen Verdrehen zueinander zu sichern.

Hierzu müssen in dem einen Profilstab mindestens zwei Stifte vorgesehen werden, wobei die Stifte in unterschiedliche, parallel zueinander verlaufende Längsnuten eines Längsnutenpaares des weiteren Profilstabes eingreifen.

Bei der erfindungsgemäßen Ausführung des Profilstabes, bei welchem zusätzlich zu dem Längsnutenpaar für die Stifte eine hinterschnittene Längsnut zwischen den Längsnuten des Längsnutenpaäres vorgesehen ist, dient vorstehende Maßnahme nicht nur der Verdrehsicherung, sondern dient auch dazu, ein Aufweiten der hinterschnittenen zwischen den Längsnuten des Längsnutenpaares aufgenommenen Längsnut zu verhindern, wenn, beispielsweise über einen Nutstein oder ein sonstiges Verbindungs- bzw. Verankerungselement eine Zugkraft auf den Hinterschnitt ausgeübt wird, was nicht nur vorteilhaft ist, wenn zwei Profilstäbe rechtwinklig zueinander angeordnet und gegeneinander auf Zug beansprucht werden, sondern auch für den Fall Vorteile hinsichtlich eines Verhinderns einer Aufweitung der Längsnut mit sich bringt, wenn in der hinterschnittenen Längsnut ein Befestigungselement für eine Tür; insbesondere ein Scharnierelement festgelegt wird, wobei das Scharnierelement über ein Verankerungselement in der hinterschnittenen Längsnut befestigt wird.

Weiterhin können die Längsnuten eines Längsnutenpaares einer weiteren, primär rechtwinkligen Positionierung zweier Profilstäbe zur Montagevereinfachung dienen, wenn zwei Profilstäbe mit einem Winkelement aneinander festgelegt werden, welches über entsprechende Fortsätze in die Längsnuten der Längsnutenpaare der rechtwinklig zueinander angeordneten Profilstäbe eingreift. Gleichzeitig kann über derartige Winkelelemente für den Fall des Vorsehens einer hinterschnittenen Längsnut zusätzlich zu den Längsnuten eines Längsnutenpaares ein Aufweiten der hinterschnittenen Längsnut verhindert werden.

Im einfachsten Fall weist der Profilstab an nur einer Seitenfläche ein Längsnutenpaar mit zwei parallelen Längsnuten zur jeweiligen Aufnahme eines in einer stirnseitigen Öffnung eines weiteren Profilstabes aufgenommenen Stiftes auf. In diesem Fall sind die Längskanäle jeweils auf einer gedachten Schnittlinie einer Längsmittelebene einer Längsnut des Längsnutenpaares und einer weiteren Ebene angeordnet, die orthogonal verläuft zu einer Seitenfläche, die im rechten Winkel zu derjenigen Seitenfläche verläuft, die das Längsriutenpaar aufweist. Für den bevorzugten Fall, dass an mindestens zwei rechtwinklig zueinander verlaufenden Seitenflächen jeweils ein Längsnutenpaar vorgesehen ist, liegen die Längskanäle auf jeweils einer Schnittlinie zweier Längsmittelebenen zweier Längsnuten, die sich auf um 90° zueinander verlaufenden Seitenflächen befinden. Unabhängig von der konkreten Ausführungsform ist es bevorzugt, wenn die jeweilige Schnittlinie eine Längsmittelachse des zugehörigen Längskanals bildet.

Neben den zuvor beschriebenen Ausführungsformen, nach denen auf nur einer Seitenfläche zwei Längsnuten oder auf zwei rechtwinklig zueinander verlaufenden Seitenflächen jeweils zwei Längsnuten vorgesehen sind, ist auch eine Ausführungsform möglich, bei welcher an drei Seitenflächen jeweils ein Längsnutenpaar zur Aufnahme von in den Längskanälen eines weiteren Profilstabes angeordneten Stiften vorgesehen sind. Auch ist es möglich und besonders bevorzugt, auf sämtlichen vier Seitenflächen jeweils ein Längsnutepaar vorzusehen, wobei die Längskanäle dann jeweils auf Schnittlinien zweier Längsmittelebenen zweier Längsnuten unterschiedlicher Längsnutenpaare angeordnet sind, welche sich auf um 90° zueinander versetzten Seitenflächen befinden.

Ganz besonders bevorzugt ist es, wenn die mindestens zwei von zwei Längskanälen gebildeten Öffnungen einer Stirnseite diametral bezogen auf eine Längsmittelachse des Profils gegenüberliegend angeordnet sind. Bevorzugt liegen die Öffnungen auf einer Symmetrieebene des Profilstabes, die im 45° Winkel zu zwei Seitenflächen verläuft. Für den Fall des Vorsehens von vier Öffnungen pro Stirnseite, wobei jede Öffnung von jeweils einem Längskanal gebildet ist, ist es bevorzugt, wenn die Öffnungen auf den Ecken eines gedachten Quadrats liegend angeordnet sind. Das Vorsehen von vier Öffnungen bzw. vier Längskanälen ist für eine Ausführungsform des Profilstabes besonders bevorzugt, bei welcher der Profilstab an mindestens zwei rechtwinklig zueinander angeordneten Seitenflächen jeweils ein Längsnutenpaar zur Aufnahme von in Öffnungen eines weiteren Profilstabes angeordneten Stiften aufweist.

Wie eingangs bereits angedeutet, gibt es hinsichtlich der Ausgestaltung der Längsnuten der Längsnutenpaare oder des mindestens einen Längsnutenpaares unterschiedliche Möglichkeiten. Insbesondere bei größeren Profilstäben ist es bevorzugt, wenn die Längsnuten eines Längsnutenpaares zur Aufnahme von Stiften als hinterschnittene Längsnuten ausgebildet sind, in denen typischerweise Nutsteine aufgenommen werden können. Bei derartigen Profilstäben dienen die Stifte in erster Linie der Verdrehsicherung.

Erfindungsgemäß ist zusätzlich zu zumindest einem Längsnutenpaar auf einer Seitenfläche eine hinterschnittene Längsnut vorgesehen, die mittig zwischen den Längsnuten des Längsnutenpaares zur Aufnahme von Stiften verläuft, um ein Aufbiegen der Längsnut bei. Zugkraftbeaufschlagung senkrecht zur Flächenerstreckung der Seitenfläche zu verhindern und um gleichzeitig eine Verdrehsicherung für einen Verbund aus zwei rechtwinklig zueinander verlaufenden und aneinander anliegenden Profilstäben bereitzustellen.

Es ist bevorzugt, wenn die Längsnuten des Längsnutenpaares einen rechteckförmigen Querschnitt aufweisen, oder alternativ auch als hinterschnittene Längsnuten ausgebildet sind, insbesondere zur Aufnahme von doppelschwalbenschwanzförmigen Verbindern zum miteinander Verbinden zweier paralleler, aneinander anliegender Profilstäbe.

Besonders zweckmäßig ist eine Ausführungsform des Profilstabes, bei der dieser einen, bevorzugt jedoch nicht zwingend kreisförmig konturierten, Zentralkanal, insbesondere zur Aufnahme einer Ankerschraube aufweist. Bei Bedarf kann der Zentralkanal mit einem Innengwinde versehen werden.

Besonders zweckmäßig ist es, wenn eine zwischen zwei diametral gegenüberliegenden Längskanälen angeordnete, gedachte Verbindungslinie den vorgenannten Zentralkanal mittig schneidet. Bevorzugt handelt es sich bei der Verbindungslinie um eine Symmetrielinie, die zu zwei benachbarten Seitenflächen in einem 45° Winkel verläuft.

Um eine einfache Montage zu ermöglichen und um einen einfachen konstruktiven Aufbau zu gewährleisten, hat es sich als besonders bevorzugt herausgestellt, wenn der Durchmesser der von den Längskanälen auf den Stirnseiten gebildeten Öffnungen einer Nutbreite der Längsnuten entspricht. Bevorzugt entspricht der Durchmesser einer minimalen Nutbreite für den Fall, dass die Längsnuten als hinterschnittene Nuten ausgebildet sind.

Die Erfindung führt auch auf ein System, umfassend mindestens einen nach dem Konzept der Erfindung ausgebildeten Profilstab, wobei aus mindestens zwei der auf einer Stirnseite vorgesehenen und von jeweils einem Längskanal gebildeten Öffnungen ein Stift herausragt, der über die Stirnseite vorsteht, derart, dass die mindestens zwei Stifte in unterschiedlichen Längsnuten eines Längsnutenpaares aufgenommen werden können. Im Hinblick auf die Ausgestaltung der Stifte bzw. die Art und Weise des Festlegens der Stifte (Fortsätze) gibt es unterschiedliche Möglichkeiten.

Möglich ist es, die Stifte als Außengewindestifte auszubilden, die mit einem Außengewinde in ein dann in den Längskanälen vorgesehenes Innengewinde eingeschraubt werden können, oder die ein selbstschneidendes Gewinde aufweisen, um ein entsprechendes Innengewinde in dem zugehörigen Längskanal spanend oder durch Umformen herzustellen. Besonders zweckmäßig ist eine Ausführungsform, der die Stifte als sogenannte Kerb- oder Passstifte ausgebildet sind, die klemmend, insbesondere durch Realisierung einer Presspassung in den Längskanälen gehalten sind. Hierzu entspricht der Durchmesser des Stiftes zumindest näherungsweise dem Innendurchmesser des zugehörigen Längskanals. Besonders zweckmäßig ist es, wenn zudem der Durchmesser der Stifte zumindest näherungsweise einer Nutbreite einer zugehörigen Längsnut, insbesondere einer minimalen Längsnutbreite entspricht.

Bevorzugt umfasst das System auch ein Verbindungselement zum Verbinden zweier erfindungsgemäßer Profilstäbe. Dabei ist es besonders zweckmäßig, wenn das Verbindungselement zwei rechtwinklig zueinander angeordnete Auflageabschnitte aufweist, in denen bevorzugt jeweils eine Durchgangsöffnung für ein mit einer hinterschnittenen Längsnut des Profilstabes zumindest mittelbar zusammenwirkendes Verbindungselement vorgesehen ist, und dass auf der dem jeweiligen Profilstab zugewandten Seite des Verbindungselementes wenigstens ein Fortsatz ausgebildet ist, der mit einer Längsnut eines Längsnutenpaares zusammenwirkt bzw. in diese senkrecht zu deren Längserstreckung hineinragt und der das Verbindungselement hierdurch zu dem Profilstab ausrichtet. Hierdurch lässt sich das Verbindungselement besonders einfach zu den Profilstäben positionieren bzw. mit diesen in Verbindung bringen, wobei die Profilstäbe und das Verbindungselement über die Fortsätze und die Längsnuten von Längsnutenpaaren zueinander ausgerichtet sind.

Eine besonders sichere und robuste Positionierung der Profilstäbe mittels des zuvor skizzierten Verbindungselementes lässt sich erzielen, wenn beiden Längsnuten eines Längsnutenpaares jedes Profilstabes zwei in Längsrichtung der Längsnuten voneinander beabstandete Fortsätze zugeordnet sind.

In konstruktiv bevorzugter Ausgestaltung des Verbindungselementes ist es vorgesehen, dass die beiden Auflageabschnitte an plattenförmigen Auflageelementen ausgebildet sind, und dass die Auflageelemente an ihren Stirnseiten mittels senkrecht zur Ebene der Auflageelemente angeordneter Versteifungsplatten verbunden sind. Dadurch werden die Biegemomente die über einen ersten Profilstab eingeleitet werden, besonders gut von dem Verbindungselement auf den zweiten Profilstab übertragen.

In ganz besonders bevorzugter Ausgestaltung der Herstellung des Verbindungselementes wird vorgeschlagen, dass das Verbindungselement als Aluminiumdruckgussteil oder als Kaltfließpressteil ausgebildet ist.

Die Erfindung führt auch auf einen Profilverbund, umfassend einen ersten und einen zweiten Profilstab, wobei diese Profilstäbe jeweils nach dem Konzept der Erfindung ausgebildet sind. Der erste und der zweite Profilstab sind im Rahmen des Profilverbundes rechtwinklig zueinander angeordnet, derart, dass der erste Profilstab mit einer Stirnseite auf einer Seitenfläche des zweiten Profilstabes aufliegt, wobei in mindestens zwei stirnseitigen, von jeweils einem Längskanal gebildeten Öffnungen des ersten Profilstabes ein Stift, insbesondere ein Kerb- oder Passstift festgelegt ist, der in eine Längsnut eines Längsnutenpaares des zweiten Profilstabes eingreift. Besonders zweckmäßig ist es dabei, wenn zusätzlich ein Verbindungselement vorgesehen ist, mit dem die beiden Profilstäbe gegeneinander auf Zug beansprucht werden. Bei den Profilstäben handelt es sich um Profilstäbe, die neben einem Längsnutenpaar zur Aufnahme des Verbindungselementes eine zwischen den Längsnuten des Längsnutepaares angeordnete, hinterschnittene Längsnut aufweisen, deren Aufweiten durch das Eingreifen des ersten Profilstabes mit den stirnseitigen Stiften in Längsnuten des Längsnutenpaares des zweiten Profilstabes verhindert wird.

Die Erfindung führt auch auf ein Verfahren zum Herstellen eines vom Konzept der Erfindung ausgebildeten Profilverbundes, wobei hierzu zwei nach dem Konzept der Erfindung ausgebildete Profilstäbe bereitgestellt bzw. verwendet werden.

Der erste Profilstab wird stirnseitig mit mindestens zwei Stiften versehen, die in Öffnungen eingebracht werden, die von jeweils einem Längskanal gebildet sind, wobei die beiden Profilstäbe so zueinander ausgerichtet werden, dass die Stifte in die Längsnuten eines Längsnutenpaares des zweiten Profilstabes eingreifen. Bevorzugt werden beide Profilstäbe zusätzlich über ein Verbindungselement gegeneinander auf Zug beansprucht, wobei das Verbindungselement, je nach Ausgestaltung, insbesondere mittels eines Nutsteines in zumindest eine hinterschnittene Längsnut eines der Profilstäbe eingreift und/oder in einen Längskanal eines der Profilstäbe oder in eine Längsnut in Richtung ihrer Längserstreckung, insbesondere durch Verschrauben festgelegt wird. Ein nach dem Konzept der Erfindung ausgebildeter Profilverbund lässt sich besonders einfach montieren und die Profistäbe lassen sich besonders einfach zueinander positionieren bzw. ausrichten.

Weiterhin werden über einen Profilstab eingeleitete Drehmomente oder Kräfte besonders gut von dem anderen Profilstab aufgenommen, ohne dass dieser verformt oder beschädigt wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: einen Profilstab nach dem Konzept der Erfindung,
- Fig. 2: eine Querschnittsansicht des Profilstabes gemäß Fig. 1,
- Fig. 3: eine Draufsicht auf den Profilstab gemäß Fig. 1,
- Fig. 4 und Fig. 5: jeweils ein Verbindungselement zum Verbinden zweier Profilstäbe in unterschiedlichen perspektivischen Darstellungen
- Fig. 6: einen aus zwei Profilstäben und einem Verbindungselement bestehenden Profilverbund in Seitenansicht, wobei selbstverständlich alternative Verbindungselemente vorgesehen werden könnten, insbesondere solche, die die beiden Profilstäbe gegeneinander auf Zug beanspruchen,
- Fig. 7: eine Ansicht auf den Profilverbund gemäß Fig. 6 in Richtung des Pfeils VII der Fig. 6,
- Fig. 8: eine Ansicht nach dem Profilverbund in Richtung des Pfeils VIII der Fig. 6,
- Fig. 9: eine perspektivische Ansicht des Profilstabes gemäß Fig. 1 mit aus von Längskanälen gebildeten Öffnungen stirnseitig herausragenden Stiften,
- Fig. 10: einen gegenüber Fig. 7 modifizierten Profilverbund, und
- Fig. 11: einen Querschnitt durch an ihren Seitenflächen miteinander verbundenen Profilstäben.

Gleiche Bauteile bzw. Bauteile mit gleicher Funktion sind in den Figuren mit den gleichen Bezugsziffern versehen.

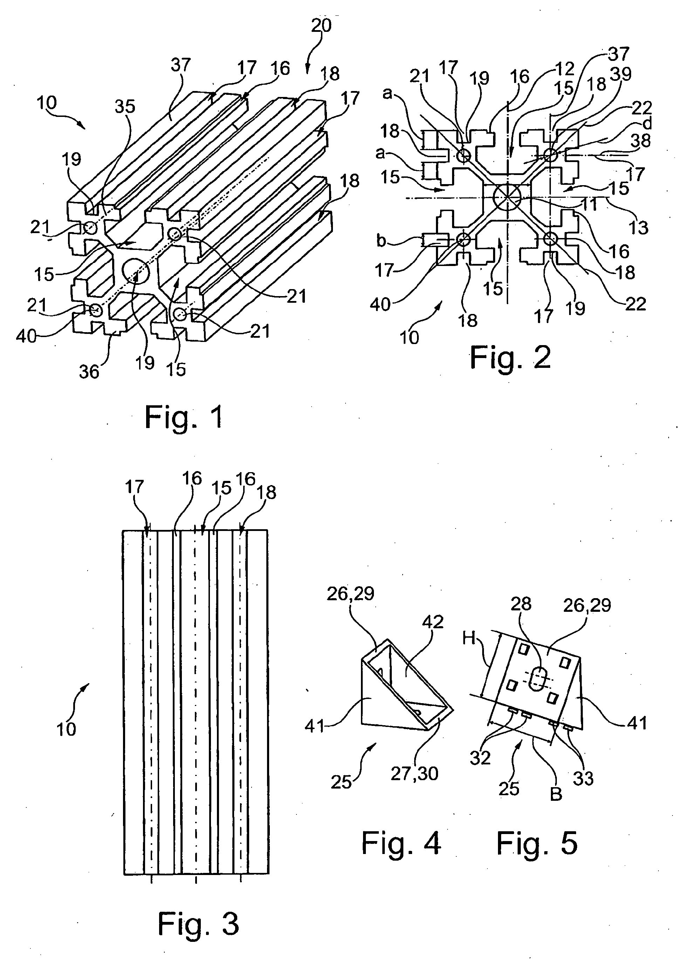

In den Fig. 1 bis 3 ist ein nach dem Konzept der Erfindung ausgebildeter Profilstab 10 dargestellt. Der Profilstab 10 besteht zumindest im Wesentlichen aus Aluminium, vorzugsweise aus AlMgSi1, und ist im Fließpressverfahren hergestellt. Wie insbesondere anhand der Fig. 2 erkennbar ist, weist der Profilstab 10 eine im Wesentlichen quadratische Querschnittsform mit vier identisch ausgebildeten Seitenflächen auf. In einem Kernbereich des Profilstabs 10 ist ein in Längsrichtung durchgehender Zentralkanal 11 ausgebildet. Der Profilstab 10 weist zwei rechtwinklig zueinander angeordnete Symmetrieebenen 12, 13 auf, die sich mittig im Zentralkanal 11 schneiden. In jeder der Seitenflächen des Profilstabs 10 ist mittig zur jeweiligen Symmetrieebene 12, 13 eine durchgehende, in Längsrichtung des Profilstabs 10 verlaufende, hinterschnittene Längsnut 15 ausgebildet. Die hinterschnittene Längsnut 15 dient in bekannter und daher nicht näher erläuterter Art und Weise der Aufnahme beispielsweise von Nutsteinen oder dergleichen, wobei in dem Nutstein eine Gewindebohrung ausgebildet ist, die mit einer ebenfalls nicht dargestellten Befestigungsschraube zusammenwirkt. Mittels eines derartigen Nutsteins sowie der Befestigungsschraube lassen sich beispielsweise Anbauteile an einem Profilstab 10 befestigen. Auf der der jeweiligen Seitenfläche des Profilstabs 10 zugewandten Seite der hinterschnittenen Längsnut 15 ist ferner noch jeweils ein stufenförmiger Absatz 16 ausgebildet.

Symmetrisch zu den Symmetrieebenen 12, 13 in jeder der Seitenflächen des Profilstabs 10 zwei, in Längsrichtung des Profilstabs 10 verlaufende, durchgehende Längsnuten 17, 18 ausgebildet. Die Längsnuten 17, 18 bilden zusammen ein Längsnutenpaar und weisen im ersten Ausführungsbeispiel einen jeweils rechteckförmigen, insbesondere einen quadratischen Querschnitt auf. Hierbei ist der Abstand a der Längsnuten 17, 18 des Längsnutenpaares zur jeweiligen Seitenfläche des Profilstabs 10 sowie zum Absatz 16 der hinterschnittenen Längsnut 15 beispielhaft in etwa gleichgroß ausgebildet.

Beispielhaft weist der Profilstab 10 eine Kantenlänge von jeweils 40mm auf. Der Abstand a beträgt 5 mm, und die Nutbreite b der zusätzlichen Längsnuten 17, 18 beträgt jeweils 4mm bei einer Nuttiefe von 3mm.

Weiterhin ist es vorgesehen, dass beabstandet zum Nutgrund 19 der jeweiligen Längsnut 17, 18 des Längsnutenpaares 20, ein in Längsrichtung des Profilstabs 10 verlaufender Längskanal 21 mit einem Durchmesser d ausgebildet ist, wobei der Durchmesser d der Nutbreite b der zusätzlichen Längsnut 17, 18 angepasst ist. Hierbei ist der zusätzliche Längskanal 21 zu den zusätzlichen Längsnuten 17, 18 derart ausgerichtet, dass der zusätzliche Längskanal 21 parallel zu der jeweiligen Längsnut 17, 18 verläuft, wobei eine zwischen zwei diametral gegenüberliegenden Längskanälen 21 angeordnete Verbindungslinie 22 den Zentralkanal 11 mittig schneidet. Wie sich aus den Figuren 1 und 2 zweifelsfrei ergibt, bilden die, in dem gezeigten Ausführungsbeispiel vier Längskanäle 21 stirnseitig jeweils eine Öffnung 40 aus, wobei die Öffnungen 40 in dem gezeigten Ausführungsbeispiel mittig durchsetzt sind von der zugehörigen Schnittlinie, auf dem der zugehörige Längskanal 21 liegt.

Alternative Befestigungskonzepte sind ebenfalls realisierbar. Diese haben im Regelfall gemeinsam, dass ein zur Anwendung kommendes Verbindungselement beide Profilstäbe gegeneinander auf Zug beaufschlagt. Die Längskanäle 21 sind jeweils auf einer Schnittlinie 25 zweier rechtwinklig zueinander angeordneter Ebenen angeordnet, wobei in dem gezeigten Ausführungsbeispiel diese Ebenen als Mittelebenen zweier Längsnuten von um 90° zueinander versetzten Längsnutenpaaren gebildet sind, so dass ein den Längskanälen 21 aufgenommener Stift (nicht dargestellt) in eine zugehörige Längsnut eines identischen Profilstabes eingreifen kann, wenn die beiden Profilstäbe im rechten Winkel zueinander angeordnet sind, derart, dass der die Stifte aufweisende Profilstab mit seiner Stirnseite 36 auf einer Seitenfläche 37 des anderen Profilstabes aufliegt.

Jeder der Längskanäle 21 liegt auf einer Schnittlinie 35 zweier Längsmittelebenen 36, 37, die zur Verdeutlichung in Fig. 2 eingezeichnet sind. Die Schnittlinien 35 bilden die jeweiligen Längsmittelachsen der zugehörigen Längskanäle 21. Wie sich aus Fig. 2 ergibt, gehören die sich in der Schnittlinie 35 schneidenden Längsmittelebenen 36, 37 zu zwei Längsnuten unterschiedlicher Längsnutenpaare. Diese Längsnutenpaare befinden sich auf zwei rechtwinklig zueinander angeordneten Seitenflächen des Profilstabes. Durch die Anordnung der Längskanäle 21 auf diesen Schnittlinien 35 ist sichergestellt, dass ein in eine von einem Längskanal 21 stirnseitig gebildete Öffnung 40 eingebrachter Stift sich in eine Längsnut eines rechtwinklig verlaufenden, identischen Profilstabes einstecken lässt. Bei einem alternativen, nicht dargestellten Ausführungsbeispiel, bei welchem beispielsweise nur an einer der Seitenflächen 37 ein Längsnutenpaar 22 zur Aufnahme von Stiften vorgesehen ist, wird eine entsprechende Schnittlinie ebenfalls als gebildet von zwei senkrecht zueinander angeordneten Ebenen, wobei eine der Ebenen von einer Längsmittelebene einer Längsnut des Längsnutenpaares gebildet ist und die weitere Ebene eine Ebene ist, die senkrecht steht auf einer Seitenfläche, welche rechtwinklig verläuft zu derjenigen Seitenfläche, die das Längsnutenpaar aufweist.

Grundsätzlich bevorzugt ist eine Ausführungsform, nach welcher zumindest zwei Längskanäle auf jeweils einer Schnittlinie liegen, die jeweils gebildet ist von zwei sich in der Schnittlinie schneidenden Längsmittelebenen zweier Längsnuten unterschiedlicher Längsnutenpaare, die sich auf zwei rechtwinklig zueinander angeordneten Seitenflächen befinden.

In den Fig. 4 und 5 ist ein Verbindungselement 25 zur Verwendung mit erfindungsgemäßen Profilstäben 10 dargestellt. Das Verbindungselement 25 ist in einer ersten Ausgestaltung als (Aluminium-) Druckgussteil ausgebildet und umfasst zwei rechtwinklig zueinander angeordnete Auflageabschnitte 26, 27, in denen jeweils ein Langloch 28 ausgebildet ist, das mit der hinterschnittenen Nut 15 fluchtet. Die Breite B und Höhe H der beiden Auflageabschnitte 26, 27 beträgt bevorzugt ebenfalls jeweils 40mm.

Die Auflageabschnitte 26, 27 sind in quadratischen, plattenförmigen Auflageelementen 29, 30 ausgebildet, die über im Querschnitt dreiecksförmige Versteifungsplatten 41, 42 miteinander verbunden sind, die an den gegenüberliegenden Stirnseiten der Auflageelementen 29, 30 angeordnet sind. Auf den den Versteifungsplatten 41, 42 abgewandten Unterseiten der Auflageelemente 29, 30 sind jeweils vier Fortsätze 32, 33 angeordnet. Die Fortsätze 32, 33 sind jeweils in etwa quaderförmig mit rechteckförmigem Querschnitt ausgebildet, wobei die einen, in Längsrichtung zueinander beabstandeten Fortsätze 32 beispielsweise der einen zusätzlichen Längsnut 17 zugeordnet sind, während die beiden anderen, in Längsrichtung ebenfalls beabstandeten Fortsätze 33 der zweiten zusätzlichen Längsnut 18 zugeordnet sind. Der Querschnitt der Fortsätze 32, 33 ist insbesondere der Breite b der Längsnuten 17, 18 eines Längsnutenpaares 20 angepasst.

In alternativer Ausgestaltung des Herstellprozesses des Verbindungselements 25 kann dieses auch als Kaltfließpressteil ausgebildet sein. Dabei können die Fortsätze 32, 33 entweder während des Formprozesses ausgebildet werden oder aber als zusätzliche, stiftförmige Bauteile ausgebildet sein, die zum Beispiel in entsprechend vorgefertigte Öffnungen des Verbindungselements in einem separaten Fertigungsschritt eingepresst werden.

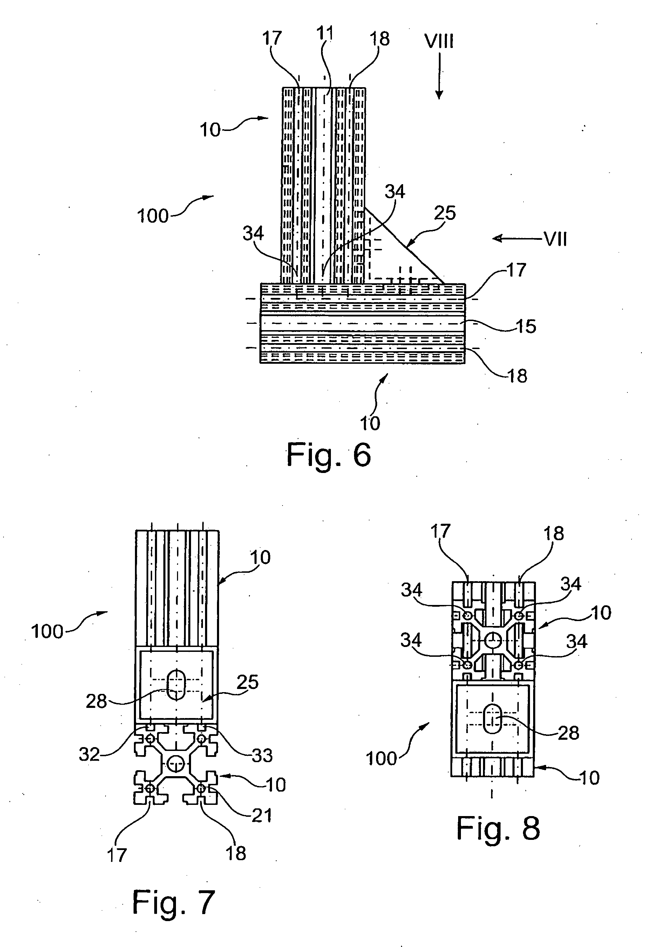

In den Fig. 6 bis 8 ist ein Profilverbund 100, bestehend aus wenigstens zwei erfindungsgemäßen Profilstäben 10 sowie einem die wenigstens zwei Profilstäbe 10 miteinander verbindenden Verbindungselement 25, dargestellt. Hierbei erfolgt die Darstellung der Verbindung zwischen dem Verbindungselement 25 und den Profilstäben 10 der Einfachheit halber ohne das bereits angesprochene Verankerungselement bzw. den Nutstein sowie dessen in dem Zentralkanal 11 angeordneten Gegenelement, das auf das Verankerungselement bzw. den Nutstein die angesprochene Zugkraft ausübt, wobei die angesprochenen Teile bei einem Profilverbund 100 zur Festsetzung der Bauteile (Profilstäbe 10 und Verbindungselement 25) erforderlich sind. Insbesondere ist jedoch erkennbar, dass es entsprechend der Fig. 8 vorgesehen sein kann, dass in den Längskanälen 21 (genauer in von diesen gebildeten stirnseitigen Öffnungen 40) des Profilstabes 10, der mit seiner Stirnseite an der Seitenfläche des anderen Profilstabs 10 anliegt Stifte 34 einzusetzen, die über die Stirnseite 36 des Profilstabs 10 herausragen und in die Längskanäle 17,18 des Längsnutenpaares 20 des anderen Profilstabs 10 eingreifen. Hierzu weisen die Stifte 34 einen Durchmesser auf der in etwa der Nutbreite der Längsnuten 17, 18 des Längsnutenpaares 20 entspricht. Durch die Verwendung der Stifte 34 wird der Profilstab 10, der mit seiner Stirnseite auf der Seitenfläche des anderen Profilstabs 10 aufliegt, an einer Verdrehung gehindert bzw. zu diesem in einer Winkellage positioniert und fixiert.

Darüber hinaus stabilisieren bzw. verstärken die Stifte 34 beim Einleiten einer senkrecht zur Längsrichtung des die Stifte 34 tragenden Profilstabs 10 die beidseitig der hinterschnittenen Nut 15 angeordneten Wandbereiche des Profilstabs 10, in dessen zusätzliche Längsnuten 17, 18 die Stifte 34 eingreifen. Dadurch werden diese Wandbereiche an einem Aufbiegen, hervorgerufen durch eine Zugkraft auf den Nutstein, gehindert. Über den die Stifte 34 tragenden Profilstab 10 können auch in diesen senkrecht zu dessen Längsachse eingeleitete Drehmomente unmittelbar in den anderen Profilstab 10 übertragen werden, ohne dass hierzu das Verbindungselement 25 beansprucht wird.

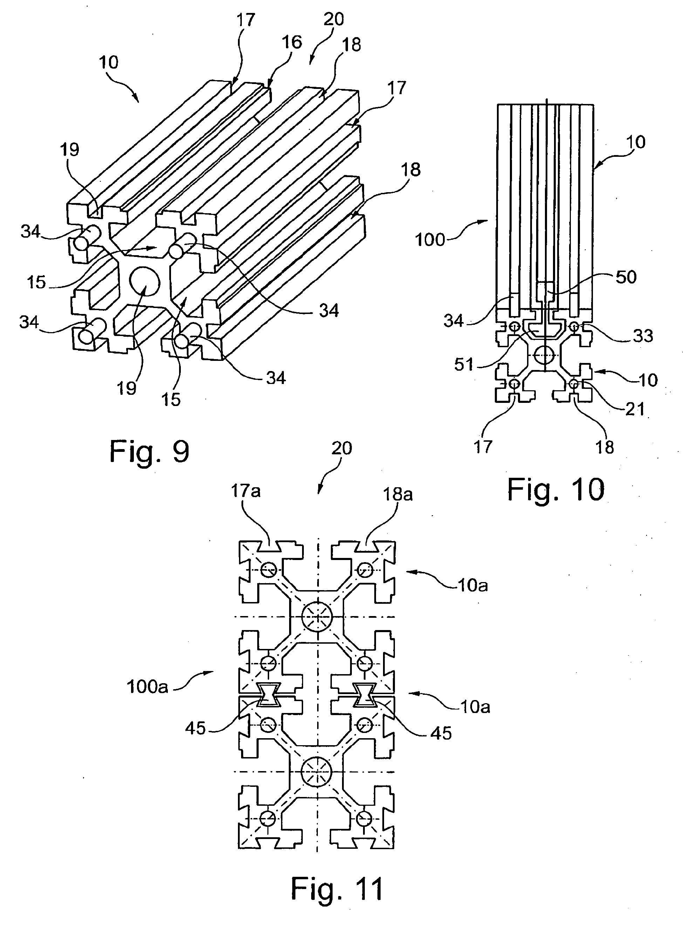

In der Fig. 9 ist der Profilstab 10, aus dessen Stirnfläche die Stifte 34 herausragen, nochmals in Einzeldarstellung dargestellt. Bei den Stiften 34 kann es sich um Kerbstifte, Passstifte o.ä. handeln, die in dem zusätzlichen Längskanal 21 axial festgesetzt ist, insbesondere durch eine entsprechende Klemm- oder Presspassung zwischen dem zusätzlichen Längskanal 21 und dem Stift 34. Hierzu sind die Stifte in die stirnseitig von den Längskanälen ausgebildeten Öffnungen einbracht.

Aus Fig. 9 wird die Lage der Stifte sowie der diesen zugeordneten Längskanälen relativ zu den Längsnuten 17, 18 der Längsnutenpaare 20 besonders deutlich. Bei der gezeigten Ausführungsform, bei der mehr als zwei Längsnutenpaare 20 (auf unterschiedlichen Seitenflächen) vorgesehen sind, ist es wesentlich, dass sich die Längskanäle und damit in der Folge auch die Stifte 34 auf Schnittlinien von Längsmittelebenen zweier Längsnuten unterschiedlicher Längsnutenpaare befinden, wobei sich die Längsnutenpaare auf um 90° zueinander versetzten Seitenflächen befinden.

Der Profilverbund 100 kann weiterhin, wie in Fig. 10 in Abänderung zur Darstellung der Fig. 6 bis 8 bei Verwendung der Stifte 36 auch ohne das Verbindungselement 25 ausgebildet werden. So erkennt man in der Fig. 10 die beiden in einem rechten Winkel zueinander angeordneten Profilstäbe 10, wobei in dem einen Profilstab 10 in dessen Zentralkanal 11 sich ein Verankerungselement 50 befindet, das auf einen in der hinterschnittenen Längsnut 15 des anderen Profilstabs 10 verankerten Nutstein 51 eine in Richtung zum Verankerungselement 50 gerichtete Zugkraft ausübt.

Die Herstellung eines Profilverbunds 100 umfasst das Befestigen eines Profilstabs 10 oder eines anderen Elements an einer Seitenfläche des Profilstabs 10 mittels eines in dem Zentralkanal 11 des Profilstabs 10 angeordneten Nutsteins 51 o.ä. und das Aufbringen einer Zugkraft auf den Nutstein 51 o.ä., wobei in die zusätzlichen Längsnuten 17, 18 des den Nutstein 51 o.ä. tragenden Profilstabs 10 Stifte 36, Fortsätze 43 o.ä. eingreifen, die den Zentralkanal 11 an einem Aufweiten infolge der Zugkraft auf den Nutstein 51 o.ä. hindern.

In der Fig. 11 sind modifizierte, Profilstäbe 10a dargestellt, die einen Profilverbund 100a ausbilden. Die Profilstäbe 10a weisen Längsnutenpaare 20a bildende Längsnuten 17a, 18a auf, die jeweils in Form einer hinterschnittenen Nut ausgebildet sind. Dadurch können zwei Profilstäbe 10a unter Verwendung wenigstens eines, in gegenüberliegende Längsnuten 17a formschlüssig eingreifenden, doppelschwalbenschwanzförmigen Verbindungssteins 45 miteinander verbunden werden. Bei der Darstellung der Fig. 11 liegen die beiden zugewandten Seitenflächen der Profilstäbe 10a aneinander an. Es sind jedoch auch Ausgestaltungen des Verbindungssteins 45 denkbar, bei denen dieser die beiden Profilstäbe 10a in Art eines Abstandhalters parallel zueinander beabstandet.

Auch ist es denkbar, dass in die hinterschnittenen Längsnuten stirnseitige Stifte eines weiteren Profilstabes eingreifen.

Der soweit beschriebene erfindungsgemäße Profilstab 10, 10a sowie dessen Verbindungselement 25 und der Verbindungsstein 45 können in vielfältiger Art und Weise abgewandelt bzw. modifiziert werden, ohne vom Erfindungsgedanken abzuweichen. So ist es beispielsweise auch denkbar, die Längskanäle 21 bzw. die Längsnuten 17, 17a, 18, 18a zur Befestigung anderer (Anbau-) Teile, wie zum Beispiel eines Türelements o.ä. zu nutzen. Auch kann ein Profilverbund 100 unter Verwendung eines Verbindungselements 25 hergestellt werden, wobei das Verbindungselement 25 keine Fortsätze 32, 33 aufweist.

### Bezugszeichenliste

- 10,a: Profilstab
- 11: Zentralkanal
- 12: Symmetrieebene
- 13: Symmetrieebene
- 15: hinterschnittene Längsnut
- 16: Absatz
- 17,a: zusätzliche Längsnut
- 18,a: zusätzliche Längsnut
- 19: Nutgrund
- 20,a: Längsnutenpaar
- 21: zusätzlicher Längskanal
- 22: Verbindungslinie
- 25: Verbindungselement
- 26: Auflageabschnitt
- 27: Auflageabschnitt
- 28: Langloch
- 29: Auflageelement
- 30: Auflageelement
- 32: Fortsatz
- 33: Fortsatz
- 34: Stift
- 36: Stirnseite
- 40: Öffnung
- 41: Versteifungsplatte
- 42: Versteifungsplatte
- 45: Verbindungsstein
- 50: Verankerungselement
- 51: Nutstein
- 100,a: Profilverbund
- a: Abstand
- b: Nutbreite
- d: Durchmesser
- B: Breite Auflageabschnitt
- H: Höhe Auflageabschnitt

## Patentansprüche

1. Als Fließpressteil, insbesondere Strangpressteil, aus einer Leichtmetalllegierung, insbesondere einer Aluminiumlegierung ausgebildeter Profilstab (10; 10a) mit einem rechteckförmigen, insbesondere quadratischen Querschnitt, wobei an mindestens einer Seitenfläche, bevorzugt an allen vier Seitenflächen jeweils ein Längsnutenpaar (20,20a), umfassend zwei parallel zueinander angeordnete und voneinander beabstandete Längsnuten vorgesehen ist, wobei mittig entlang zumindest einer mit einem Längsnutenpaar (20,20a) versehenen Seitenfläche (37), bevorzugt mittig entlang jeder Seitenfläche (37), eine hinterschnittene Längsnut (15), insbesondere zur Aufnahme von Nutsteinen (51), vorgesehen ist und wobei die Längsnuten (20,20a) des auf der jeweiligen Seitenfläche vorgesehennen Längsnutenpaares (20,20a) die hinterschnittene Längsnut (15) zwischen sich aufnehmen, und mit mindestens zwei, bevorzugt vier, parallel zu den Längsnuten verlaufenden Längskanälen, die an jeder der beiden Stirnseiten (36) des Profilstabes (10,10a) jeweils eine Öffnung (40) zum Festlegen jeweils eines Stiftes (34) bilden, wobei jeder Längskanal auf einer gedachten Schnittlinie von rechtwinklig zueinander verlaufenden und senkrecht zu jeweils einer Seitenfläche angeordneten Ebenen angeordnet ist,
**dadurch gekennzeichnet,**
**dass** zumindest eine der Ebenen eine Längsmittelebene einer Längsnut eines Längsnutenpaares (20) ist.

2. Profilstab nach Anspruch 1,
**dadurch gekennzeichnet,**
**dass** die die Schnittlinien bildenden Ebenen Längsmittelebenen zweier Längsnuten unterschiedlicher, auf zwei im rechten Winkel zueinander orientierter Seitenflächen angeordneter Längsnutpaare (20,20a) sind.

3. Profilstab nach Anspruch 1,
**dadurch gekennzeichnet**,
auf den beiden Stirnseiten (36) zwei der Öffnungen (40) diametral bezogen auf eine Längsmittelachse des Profils gegenüber liegend angeordnet sind.

4. Profilstab nach einem der vorhergehenden Ansprüche,
**dadurch gekennzeichnet,**
**dass** die Längsnuten jedes Längsnutenpaares (20,20a) eine rechteckförmige Querschnittsfläche aufweisen.

5. Profilstab nach Anspruch 4,
**dadurch gekennzeichnet,**
**dass** die Längsnuten (17,18) jedes Längsnutenpaares (20,20a) als hinterschnittene Nuten ausgebildet sind, insbesondere zur Aufnahme von, bevorzugt doppelschwalbenschwanzförmigen, Verbindern zum Verbinden zweier paralleler Profilstäbe (10,10a).

6. Profilstab nach einem der vorhergehenden Ansprüche,
**dadurch gekennzeichnet,**
**dass** der Profilstab (10; 10a) einen Zentralkanal (11), insbesondere zur Aufnahme einer Ankerschraube, aufweist

7. Profilstab nach Anspruch 6,
**dadurch gekennzeichnet,**
**dass** eine zwischen zwei diametral gegenüberliegenden Längskanälen (21) angeordnete, gedachte Verbindungsline (22) den Zentralkanal (11) mittig schneidet.

8. Profilstab nach einem der vorhergehenden Ansprüchen,
**dadurch gekennzeichnet,**
**dass** ein Durchmesser (d) der Öffnungen (40) einer Nutbreite der Längsnuten (17,18) des Längsnutenpaares entspricht.

9. System, umfassend mindestens einen Profilstab nach einem der vorhergehenden Ansprüche,
**dadurch gekennzeichnet,**
**dass** aus einer Stirnseite des Profilstabs (10, 10a) wenigstens zwei in jeweils einer der von den Längskanälen gebildeten Öffnungen (40) angeordneter Stift (34) herausragt.

10. System nach Anspruch 9,
**dadurch gekennzeichnet,**
**dass** die, bevorzugt als Kerb- oder Passstifte ausgebildeten Stifte (34) in den Längskanälen (21), vorzugsweise durch eine Klemm- oder Presspassung gehalten sind.

11. System nach einem der Ansprüche 9 oder 10,
**dadurch gekennzeichnet,**
**dass** der Durchmesser (d) der Stifte einer Nutbreite der Längsnuten entspricht.

12. System nach einem der Ansprüche 9 bis 11,
**dadurch gekennzeichnet,**
**dass** ein, bevorzugt als Aluminium-Druckgußteil oder als Kaltfließpressteil ausgebildetes Verbindungselement (25) zum miteinander Verbinden zweier Profilstäbe nach einem der Ansprüche 1 bis 10 vorgesehen ist, umfassend zwei rechtwinklig zueinander angeordnete Auflageabschnitte (26, 27), wobei auf der dem jeweiligen Profilstab (10) zugewandten Seite jedes Auflageabschnittes (26,27) wenigstens ein Fortsatz (32, 33) ausgebildet ist, der einer der Längsnuten zusammenwirkt und das Verbindungselement (25) zu dem Profilstab (10; 10a) ausrichtet.

13. System nach Anspruch 11, **dadurch gekennzeichnet, dass** in Auflageäbschnitten jeweils eine Durchgangsöffnung (28) für ein mit einer hinterschnittenen Längsnut (15) zumindest mittelbar zusammenwirkendes Befestigungselement ausgebildet ist.

14. Profilverbund (100; 100a), umfassend wenigstens einen ersten und einen zweiten Profilstab, jeweils nach einem der Ansprüche 1 bis 8, wobei der erste und der zweite Profilstab rechtwinklig zueinander angeordnet sind, derart, dass der erste Profilstab mit einer Stirnseite (36) auf einer Seitenfläche (37) des zweiten Profilstabs aufliegt und mit mindestens zwei jeweils in einer stirnseitigen, von jeweils einem Längskanal (21) gebildeten Öffnung (40) angeordneten Stiften (34) in beide Längsnuten (17,18) eines Längsnutenpaares (20) des zweiten Profilstabs eingreift und dadurch die Profilstäbe gegen Verdrehen sichert.

15. Profilverbund nach Anspruch 14,
**dadurch gekennzeichnet,**
**dass** die Profilstäbe über ein Verbindungselement, bevorzugt umfassend ein in eine hinterschnittene Längsnut eines der Profilstäbe und/oder in einen Zentralkanal eines der Profilstäbe eingreifendes Verankerungselement aneinander fixiert sind.

16. Verfahren zum Herstellen eines Profilverbunds (100; 100a) nach einem der Ansprüche 14 oder 15 unter Verwendung zweier Profilstäbe nach einem der Ansprüche 1 bis 8 **dadurch gekennzeichnet, dass** der erste Profilstab mit mindestens zwei stirnseitig vorgesehenen Stiften mit einer Seitenfläche auf dem zweiten Profilstab angeordnet wird, derart, dass die Stifte in zwei Längsnuten eines Längsnutenpaares (20,20a) eingreifen.

17. Verfahren nach Anspruch 16,
**dadurch gekennzeichnet,**
**dass** die beiden Profilstäbe über ein Verbindungselement, welches bevorzugt in eine interschnittene Längsnut und/oder einen Zentralkanal (11) zumindest eines der Profilstäbe eingreift aneinander fixiert werden, insbesondere in dem die Profilstäbe mittels des Verbindungselementes (25) gegeneinander verspannt werden..

## Claims

1. A profile bar (10; 10a) with rectangular cross section, particularly square cross section, which is realized in the form of an extruded part, particularly an extrusion-moulded part, of a light metal alloy, particularly an aluminium alloy, wherein a pair of longitudinal grooves (20, 20a), which comprises two longitudinal grooves that are arranged in parallel and spaced apart from one another, is respectively provided on at least one side, preferably on all four sides, wherein an undercut longitudinal groove (15), particularly for receiving sliding blocks (51), is arranged centrally along at least one side (37) provided with a pair of longitudinal grooves (20, 20a), preferably arranged centrally along each side (37), and wherein the undercut longitudinal groove (15) is accommodated between the longitudinal grooves (20, 20a) of the pair of longitudinal grooves (20, 20a) provided on the respective side, and with at least two longitudinal channels, preferably four longitudinal channels, which extend parallel to the longitudinal grooves and respectively form an opening (40) for fixing a respective pin (34) on each of the two end faces (36) of the profile bar (10, 10a), wherein each longitudinal channel is arranged on an imaginary intersecting line between planes that extend orthogonal to one another and are respectively arranged perpendicular to one side,
**characterized in**
**that** at least one of the planes is a longitudinal centre plane of one longitudinal groove of a pair of longitudinal grooves (20).

2. The profile bar according to claim 1,
**characterized in**
**that** the planes forming the intersecting lines are the longitudinal centre planes of two longitudinal grooves of different pairs of longitudinal grooves (20, 20a) arranged on two orthogonally oriented sides.

3. The profile bar according to claim 1,
**characterized in**
**that** two of the openings (40) are arranged on the two end faces (36) diametrically opposite of one another referred to a longitudinal centre axis of the profile.

4. The profile bar according to one of the preceding claims,
**characterized in**
**that** the longitudinal grooves of each pair of longitudinal grooves (20, 20a) have a rectangular cross-sectional area.

5. The profile bar according to claim 4,
**characterized in**
**that** the longitudinal grooves (17, 18) of each pair of longitudinal grooves (20, 20a) are realized in the form of undercut grooves, particularly for receiving connectors that preferably have a twin fish tail shape and serve for connecting two parallel profile bars (10, 10a).

6. The profile bar according to one of the preceding claims,
**characterized in**
**that** the profile bar (10; 10a) features a central channel (11), particularly for receiving an anchoring screw.

7. The profile bar according to claim 6,
**characterized in**
**that** an imaginary connecting line (22) between two diametrically opposed longitudinal channels (21) centrally intersects the central channel (11).

8. The profile bar according to one of the preceding claims,
**characterized in**
**that** a diameter (d) of the openings (40) corresponds to a groove width of the longitudinal grooves (17, 18) of a pair of longitudinal grooves.

9. A system comprising at least one profile bar according to one of the preceding claims,
**characterized in**
**that** at least two pins (34), which are respectively arranged in one of the openings (40) formed by the longitudinal channels, protrude from an end face of the profile bar (10, 10a).

10. The system according to claim 9,
**characterized in**
**that** the pins (34), which are preferably realized in the form of grooved pins or alignment pins, are preferably held in the longitudinal channels (21) by means of a clamping or interference fit.

11. The system according to one of claims 9 or 10, **characterized in**
**that** the diameter (d) of the pins corresponds to a groove width of the longitudinal grooves.

12. The system according to one of claims 9-11,
**characterized in**
**that** a connecting element (25), which is preferably realized in the form of an aluminium diecast part or a cold-extruded part, is provided for connecting two profile bars according to one of claims 1-10 to one another and comprises two supporting sections (26, 27) that are arranged orthogonal to one another, wherein at least one projection (32, 33), which cooperates with one of the longitudinal grooves and aligns the connecting element (25) relative to the profile bar (10; 10a), is formed on the side of each supporting section (26, 27) that faces the respective profile bar (10).

13. The system according to claim 11, **characterized in that** a through-opening (28) for a fastening element, which at least indirectly cooperates with an undercut longitudinal groove (15), is respectively formed in the supporting sections.

14. A profile assembly (100; 100a) comprising at least a first and a second profile bar that are respectively realized in accordance with one of claims 1-8, wherein the first and the second profile bar are arranged orthogonal to one another in such a way that an end face (36) of the first profile bar abuts on a side (37) of the second profile bar, and wherein at least two pins (34) of the first profile bar, which are respectively arranged in an opening (40) on the end face that is respectively formed by a longitudinal channel (21), engage into both longitudinal grooves (17, 18) of a pair of longitudinal grooves (20) of the second profile bar and thereby secure the profile bars against twisting.

15. The profile assembly according to claim 14,
**characterized in**
**that** the profile bars are fixed on one another by means of a connecting element, which preferably comprises an anchoring element that engages into an undercut longitudinal groove of one of the profile bars and/or into a central channel of one of the profile bars.

16. A method for producing a profile assembly (100; 100a) according to one of claims 14 or 15 by utilizing two profile bars according to one of claims 1-8, **characterized in that** at least two pins provided on the end face of the first profile bar are arranged on a side of the second profile bar in such a way that the pins engage into two longitudinal grooves of a pair of longitudinal grooves (20, 20a).

17. The method according to claim 16,
**characterized in**
**that** the two profile bars are fixed on one another by means of a connecting element that preferably engages into an undercut longitudinal groove and/or a central channel (11) of at least one of the profile bars, particularly by tensioning the profile bars relative to one another by means of the connecting element (25).

## Revendications

1. Barre profilée (10; 10a) réalisée sous forme de pièce extrudée, en particulier de pièce filée à la presse en un alliage de métal léger, en particulier en un alliage d'aluminium, avec une section transversale rectangulaire, en particulier carrée, dans lequel il est prévu sur au moins une face latérale, de préférence sur toutes les quatre faces latérales chaque fois une paire de rainures longitudinales (20, 20a), comprenant deux rainures longitudinales disposées parallèlement l'une à l'autre et espacées l'une de l'autre, dans lequel il est prévu au milieu le long d'au moins une face latérale (37) dotée d'une paire de rainures longitudinales (20, 20a), de préférence au milieu le long de chaque face latérale (37), une rainure longitudinale en contre-dépouille (15), en particulier pour recevoir des coulisseaux de rainure (51), et dans lequel les rainures longitudinales (20, 20a) de la paire de rainures longitudinales (20, 20a) prévues sur la face latérale respective contiennent entre elles la rainure longitudinale en contre-dépouille (15), et avec au moins deux, de préférence quatre canaux longitudinaux s'étendant parallèlement aux rainures longitudinales, qui forment à chacun des deux côtés frontaux (36) de la barre profilée (10, 10a) chaque fois une ouverture (40) pour la fixation d'une tige (34), dans lequel chaque canal longitudinal est disposé sur une ligne d'intersection imaginaire de plans s'étendant perpendiculairement l'un à l'autre et chaque fois disposés perpendiculairement à une face latérale, **caractérisée en ce qu'**au moins un des plans est un plan médian longitudinal d'une rainure longitudinale d'une paire de rainures (20).

2. Barre profilée selon la revendication 1, **caractérisée en ce que** les plans formant les lignes d'intersection sont des plans médians longitudinaux de deux rainures longitudinales des paires de rainures longitudinales (20, 20a) différentes disposées sur deux faces latérales orientées à angle droit l'une par rapport à l'autre.

3. Barre profilée selon la revendication 1, **caractérisée en ce que** deux des ouvertures (40) sont disposées sur les deux côtés frontaux (36) en position diamétralement opposée par rapport à un axe central longitudinal du profilé.

4. Barre profilée selon l'une quelconque des revendications précédentes, **caractérisée en ce que** les rainures longitudinales de chaque paire de rainures longitudinales (20, 20a) présentent une aire de section transversale rectangulaire.

5. Barre profilée selon la revendication 4, **caractérisée en ce que** les rainures longitudinales (17, 18) de chaque paire de rainures longitudinales (20, 20a) sont formées par des rainures en contre-dépouille, destinées en particulier à recevoir des connecteurs, de préférence en forme de queue d'aronde, pour assembler deux barres profilées parallèles (10, 10a).

6. Barre profilée selon l'une quelconque des revendications précédentes, **caractérisée en ce que** la barre profilée (10; 10a) présente un canal central (11), destiné en particulier à recevoir une vis d'ancrage.

7. Barre profilée selon la revendication 6, **caractérisée en ce qu'**une ligne de liaison imaginaire (22) disposée entre deux canaux longitudinaux (21) diamétralement opposés coupe le canal central (11) au milieu.

8. Barre profilée selon l'une quelconque des revendications précédentes, **caractérisée en ce qu'**un diamètre (d) des ouvertures (40) correspond à une largeur de rainure des rainures longitudinales (17, 18) de la paire de rainures longitudinales.

9. Système, comprenant au moins une barre profilée selon l'une quelconque des revendications précédentes, **caractérisé en ce qu'**au moins deux tiges (34) disposées respectivement dans une des ouvertures (40) formées par les canaux longitudinaux sortent d'un côté frontal de la barre profilée (10, 10a).

10. Système selon la revendication 9, **caractérisé en ce que** les tiges (34), réalisées de préférence sous forme de goujons fendus ou de goujons de serrage, sont maintenues dans les canaux longitudinaux (21), de préférence par un ajustement serré ou un ajustement sans jeu.

11. Système selon une des revendications 9 ou 10, **caractérisé en ce que** le diamètre (d) des tiges correspond à une largeur de rainure des rainures longitudinales.

12. Système selon l'une quelconque des revendications 9 à 11, **caractérisé en ce qu'**il est prévu un élément d'assemblage (25) réalisé de préférence sous la forme d'une pièce moulée par injection en aluminium ou d'une pièce extrudée à froid destiné à assembler l'une à l'autre deux barres profilées selon l'une quelconque des revendications 1 à 10, comprenant deux parties d'appui (26, 27) disposées perpendiculairement l'une à l'autre, dans lequel au moins un prolongement (32, 33) est formé sur le côté de chaque partie d'appui (26, 27) tournée vers la barre profilée respective (10), qui coopère avec une des rainures longitudinales et qui oriente l'élément d'assemblage (25) vers la barre profilée (10; 10a).

13. Système selon la revendication 11, **caractérisé en ce qu'**une ouverture de passage (28) est chaque fois formée dans les parties d'appui pour un élément de fixation coopérant au moins indirectement avec une rainure longitudinale en contre-dépouille (15).

14. Assemblage de profilés (100; 100a), comprenant au moins une première et une deuxième barre profilée, chacune selon l'une quelconque des revendications 1 à 8, dans lequel la première et la deuxième barres profilées sont disposées perpendiculairement l'une à l'autre, de telle manière que la première barre profilée s'applique par un côté frontal (36) sur une face latérale (37) de la deuxième barre profilée et s'engage, avec au moins deux tiges (34) disposées respectivement dans une ouverture (40) formée chaque fois par un canal longitudinal (21), dans deux rainures longitudinales (17, 18) d'une paire de rainures longitudinales (20) de la deuxième barre profilée et empêche de ce fait la rotation des barres profilées.

15. Assemblage de profilés selon la revendication 14, **caractérisé en ce que** les barres profilées sont fixées l'une à l'autre par un élément d'assemblage, comprenant de préférence un élément d'ancrage s'engageant dans une rainure longitudinale en contre-dépouille d'une des barres profilées et/ou dans un canal central d'une des barres profilées.

16. Procédé de réalisation d'un assemblage de profilés (100; 100a) selon une des revendications 14 ou 15 en utilisant deux barres profilées selon l'une quelconque des revendications 1 à 8, **caractérisé en ce que** la première barre profilée avec au moins deux tiges prévues du côté frontal est disposée avec une face latérale sur la deuxième barre profilée, de telle manière que les tiges s'engagent dans deux rainures longitudinales d'une paire de rainures longitudinales (20, 20a).

17. Procédé selon la revendication 16, **caractérisé en ce que** les deux barres profilées sont fixées l'une à l'autre au moyen d'un élément d'assemblage, qui s'engage de préférence dans une rainure longitudinale en contre-dépouille et/ou dans un canal central (11) d'au moins une des barres profilées, en particulier du fait que les barres profilées sont serrées l'une contre l'autre au moyen de l'élément d'assemblage (25).
